# DEMANDE DE BREVET EUROPEEN

(11) **EP 1 043 686 A1**
(43) Date de publication de la demande: **11.10.2000**
(21) Numéro de dépôt: 00400973.4
(22) Date de dépôt: 07.04.2000
(51) Int. Cl.: G06K 19/077, G06K 7/00, G06K 19/07

(54) **Support de données pour identification de l'utilisateur d'un véhicule automobile**

(30) Priorité: 09.04.1999 FR 9904436
(71) Demandeur: Valeo Securité Habitacle, 94042 Créteil (FR)
(72) Inventeur: Garnault, Joel, 95110 Sannois (FR)
(74) Mandataire: Lenne, Laurence

(57) **Abrégé**

L'invention propose un support de données (10) rigide ou semi-rigide, notamment en forme de carte ou de badge, qui porte des données d'identification de l'utilisateur d'un véhicule automobile et du type comportant au moins une batterie d'accumulateurs (14) rechargeable, caractérisé en ce qu'il comporte un circuit de charge de la batterie par effet photovoltaïque (16).

## Description

La présente invention concerne un support de données rigide ou semi-rigide, par exemple en forme de carte ou de badge, qui porte des données d'identification de l'utilisateur d'un véhicule automobile.

Un tel badge formant support de données est utilisé pour remplacer la clef mécanique, ou la clef à télécommande permettant habituellement d'accéder à l'intérieur du véhicule.

Un tel badge, afin de permettre l'identification de son porteur pour vérifier s'il est autorisé à pénétrer dans le véhicule, est en situation constante "d'écoute" pour capter une demande d'identification émise par un système de reconnaissance embarqué à bord du véhicule.

Un tel badge est donc constamment actif et il nécessite donc de disposer, pour son fonctionnement fiable, d'une quantité suffisante d'énergie électrique stockée dans le badge.

A cet effet, pour les échanges de données dédiés à l'accès au véhicule dit "mains libres", le badge est alimenté en énergie électrique par une batterie d'accumulateurs intégrée au badge qui doit être rechargée périodiquement.

Les contraintes de dimensionnement du badge, notamment en épaisseur lorsque le badge est proche par ses dimensions d'une carte de crédit à puce, aboutissent à réduire la taille de la batterie d'accumulateurs.

La présente invention a pour objet de proposer des moyens de charge de la batterie d'accumulateurs du badge qui permettent sa recharge de manière simple, que celui-ci soit porté ou non par l'utilisateur et sans qu'il soit obligatoirement nécessaire de l'introduire dans un dispositif spécifique complémentaire de charge.

Dans ce but, l'invention propose un support de données rigide ou semi-rigide, notamment en forme de carte ou de badge, qui porte des données d'identification de l'utilisateur d'un véhicule automobile et du type comportant au moins une batterie d'accumulateurs rechargeable, caractérisé en ce qu'il comporte un circuit de charge de la batterie par effet photovoltaïque.

Selon d'autres caractéristiques de l'invention :
- le circuit de charge de la batterie comporte au moins une cellule photovoltaïque ;
- le support de données comporte des moyens d'affichage de l'état de charge de la batterie ;
- les moyens d'affichage sont un écran de type LCD ;
- le support de données comporte des moyens sonores d'indication d'un état de charge suffisant de la batterie.
- le support de données est destiné à être utilisé dans un agencement pour l'échange de données entre le support de données et un dispositif, embarqué sur le véhicule, d'échange de données, notamment de lecture de données contenues dans le support, du type comportant un boîtier dans lequel le support est introduit manuellement dans un logement du boîtier dans lequel il occupe une position active, et le circuit de charge comporte au moins une cellule photovoltaïque agencée dans une zone du support qui, en position active de ce dernier, fait saillie à l'extérieur du logement du boîtier pour être soumise à un éclairage extérieur, notamment naturel ;
- le support de données est destiné à être utilisé dans un agencement pour l'échange de données entre le support de données et un dispositif, embarqué sur le véhicule, d'échange de données, notamment de lecture de données contenues dans le support, du type comportant un boîtier dans lequel le support est introduit manuellement dans un logement du boîtier dans lequel il occupe une position active, et le circuit de charge comporte au moins une cellule photovoltaïque agencée dans une zone du support qui, en position active de ce dernier, est reçue dans le logement du boîtier dans une zone dans laquelle elle est soumise à un éclairage fourni par une source lumineuse artificielle appartenant au dispositif ;
- le support est destiné à être utilisé dans un agencement pour l'échange de données entre le support de données et un dispositif, embarqué sur le véhicule, d'échange de données, notamment de lecture de données contenues dans le support, et le circuit de charge comporte au moins une cellule photovoltaïque agencée dans une zone du support qui peut être soumise à un éclairage fourni par une source lumineuse artificielle appartenant au véhicule et agencée à l'extérieur du véhicule ;
- la source lumineuse artificielle extérieure au véhicule n'est allumée qu'en cas de défaillance de l'agencement pour l'échange de données résultant d'une charge insuffisante de la batterie d'accumulateurs du support de données.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un badge formant support de données réalisé conformément aux enseignements de l'invention ;
- la figure 2 est une représentation schématique d'un agencement embarqué à bord d'un véhicule automobile utilisant un badge rechargeable conformément aux enseignements de l'invention ; et
- la figure 3 est une vue similaire à celle de la figure 2 illustrant un autre exemple des possibilités de charge d'un badge réalisé conformément aux enseignements de l'invention par un éclairage artificiel.

On a représenté sur les figures un badge 10 de forme générale parallélépipédique rectangle dont les dimensions sont ici homologues et globalement similaires à celles d'une carte de crédit.

Le badge 10 comporte un corps 12 qui intègre, de manière connue, une batterie d'accumulateurs 14 pour alimenter en énergie électrique différents composants du badge, et notamment ses circuits d'émission et de réception pour l'échange de données (non représentés).

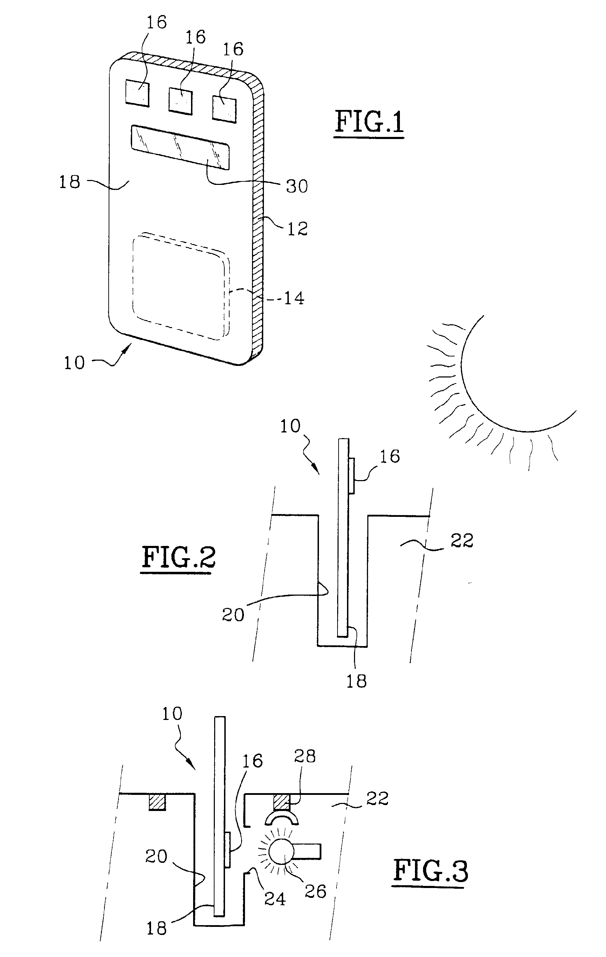

Conformément aux enseignements de l'invention, le badge 10 comporte un circuit de charge de la batterie d'accumulateurs 14 qui n'est pas représenté en détail mais qui, conformément aux enseignements de l'invention, comporte une ou plusieurs cellules photovoltaïques ou photoélectriques 16 agencées dans une face latérale 18 du corps 12 et au voisinage de la partie supérieure du badge 10 en considérant la figure 1.

Les cellules photoélectriques 16 sont reliées au circuit de charge pour permettre la recharge automatique de la batterie d'accumulateurs 14 dès qu'elles sont soumises à un éclairage naturel ou artificiel.

Afin de pouvoir déterminer l'état de charge de la batterie d'accumulateurs 14, le badge 10 peut comporter un écran d'affichage 30, par exemple du type LCD, qui permet à l'utilisateur de déterminer immédiatement s'il est nécessaire qu'il procède rapidement à une mise en charge de la batterie d'accumulateurs 14 en prévoyant de disposer les cellules photoélectriques 16 en regard d'un éclairage naturel ou artificiel.

Comme on l'a représenté de manière très simplifiée à la figure 2, le badge 10 est prévu pour être reçu, après que l'utilisateur ait pénétré dans le véhicule, dans un logement 20 appartenant à un boîtier 22 embarqué à bord du véhicule.

Un tel agencement peut notamment permettre à l'utilisateur, lorsqu'un badge conforme est introduit dans le boîtier ou dispositif de lecture 22, de procéder au démarrage du moteur du véhicule.

Dans la première conception du support formant badge 10 en association avec les dimensions du logement 20 illustrée à la figure 2, la partie supérieure du badge 10 fait saillie en dehors du logement 20 de manière que les cellules photovoltaïques 16 puissent être soumises de préférence à un éclairage naturel ou un éclairage artificiel complémentaire provenant de lampes d'éclairage agencées à l'intérieur de l'habitacle du véhicule.

Un tel agencement est particulièrement avantageux dans le cas d'une configuration d'antivol et de démarrage du véhicule dans laquelle il est nécessaire que le badge 10 soit inséré dans le logement 20 lors de chaque utilisation.

Dans le second exemple d'agencement illustré à la figure 3, la position des cellules photoélectriques 16 sur le badge 10 et les dimensions du logement 20 sont telles que les cellules 16 sont situées à l'intérieur du logement 20 en regard d'une ouverture 24 qui permet d'obtenir un effet d'éclairage des cellules 16, et donc une charge ou recharge de la batterie d'accumulateurs 14, par une lampe 26 agencée dans le boîtier 22 qui a aussi pour fonction d'éclairer la zone périphérique de la fente d'introduction du badge 10 dans le logement 20, par exemple par l'intermédiaire d'un anneau translucide 28.

Dans le cas où le système de limitation de l'accès au véhicule et d'antivol est du type "mains libres" complet, c'est-à-dire dans le cas où il n'est pas nécessaire que le conducteur introduise le badge dans un dispositif complémentaire embarqué à bord du véhicule pour procéder au démarrage, la charge du badge s'effectue lorsque l'utilisateur expose volontairement les cellules photovoltaïques à la lumière naturelle ou artificielle.

Dans tous les cas, la conception selon l'invention est particulièrement avantageuse en ce qu'il n'est jamais nécessaire d'installer le badge sur un dispositif spécifique de charge.

La présence d'un indicateur de charge, par exemple sous la forme de l'écran d'affichage 20, permet à l'utilisateur d'effectuer la charge de la batterie d'accumulateurs 14 à titre préventif.

Il est aussi possible d'indiquer systématiquement à l'utilisateur que la charge du badge est suffisante en prévoyant que le support de données émette un signal sonore ou vibratoire à chaque fois qu'il émet une réponse autorisant l'accès au véhicule par ouverture de la porte.

Si l'utilisateur ne perçoit pas ce signal sonore, il comprend alors que la charge du badge est insuffisante et qu'il doit procéder à sa recharge par effet photovoltaïque.

L'état de charge insuffisant peut se produire la nuit. Afin de recharger alors le badge pour pouvoir pénétrer dans le véhicule sans avoir à rechercher une source lumineuse trop éloignée du véhicule, il est possible de prévoir que ce dernier comporte lui même une source lumineuse artificielle extérieure prévue à cet effet.

Cette source lumineuse est par exemple une lampe aménagée dans l'ensemble de poignée pour l'ouverture de la porte du conducteur. Son allumage est provoqué lorsque l'utilisateur agit sur le levier d'ouverture appartenant à la poignée. La recharge, au moins partielle, est alors effectuée en plaçant le badge sous la lampe.

Afin de limiter la consommation électrique, l'allumage de cette lampe peut être limité aux cas dans lesquels le système global d'identification attend une réponse d'identification en provenance du badge et qu'il ne reçoit pas cette réponse, la durée de l'allumage pouvant elle aussi être limitée dans le temps.

## Revendications

1. Support de données (10) rigide ou semi-rigide, notamment en forme de carte ou de badge, qui porte des données d'identification de l'utilisateur d'un véhicule automobile, et qui est destiné à être utilisé dans un agencement pour l'échange de données entre le support de données (10) et un dispositif (22), embarqué sur le véhicule, d'échange de données, notamment de lecture de données contenues dans le support (10), et du type dans lequel le support (10) comporte au moins une batterie d'accumulateurs (14) rechargeable et un circuit de charge de la batterie, caractérisé en ce que le circuit de charge comporte au moins une cellule photovoltaïque (16) agencée dans une zone du support (10) qui peut être soumise à un éclairage fourni par une source lumineuse (26), naturelle ou artificielle, extérieure au véhicule.

2. Support de données (10) selon la revendication précédente, du type qui est destiné à être utilisé dans un agencement comportant un boîtier (22) dans lequel le support (10) est introduit manuellement dans un logement (20) du boîtier (22) dans lequel il occupe une position active, caractérisé en ce que la cellule photovoltaïque (16) est agencée dans une zone du support (10) qui, en position active de ce dernier, fait saillie à l'extérieur du logement (20) du boîtier (22) pour être soumise à l'éclairage de la source lumineuse (26).

3. Support de données (10) selon la revendication principale, caractérisé en ce que la source lumineuse (26) est artificielle et appartient au véhicule.

4. Support de données (10) selon la revendication précédente, caractérisé en ce que la source lumineuse artificielle (26) n'est allumée qu'en cas de défaillance de l'agencement pour l'échange de données résultant d'une charge insuffisante de la batterie d'accumulateurs (14) du support de données (10).

5. Support de données (10) selon l'une quelconque des revendications précédentes, caractérisé en ce qu'il comporte des moyens (20) d'affichage de l'état de charge de la batterie (14).

6. Support de données (10) selon la revendication précédente, caractérisé en ce que les moyens d'affichage (20) sont un écran de type LCD.

7. Support de données (10) selon l'une quelconque des revendications précédentes, caractérisé en ce qu'il comporte des moyens sonores d'indication d'un état de charge suffisant de la batterie (14).
